# EUROPEAN PATENT APPLICATION

(11) **EP 3 845 421 A1**
(43) Date of publication of application: **07.07.2021**
(21) Application number: 20175834.9
(22) Date of filing: 20.05.2020
(51) Int. Cl.: B60R 19/24

(54) **MOTOR VEHICLE END STRUCTURE ASSEMBLY AND ASSEMBLY METHOD THEREOF**

(30) Priority: 30.12.2019 CN 201922436754 U
(71) Applicant: Yanfeng Plastic Omnium Automotive Exterior Systems Co., Ltd., Shanghai 201805 (CN); Yanfeng Plastic Omnium (Shenyang) Automotive Exterior Systems Co., Ltd., Shenyang, Liaoning Province 110143 (CN); Compagnie Plastic Omnium SE, 69007 Lyon (FR)
(72) Inventor: XU, Jie, Shanghai, 201805 (CN)
(74) Representative: LLR

(57) **Abstract**

The invention provides an end structure assembly for a motor vehicle and its assembly method, comprising: a bumper skin (10) and a vehicle bodywork. The end structure assembly further includes:
-a pair of skin-side supports (20), which are respectively mounted at the two lateral ends of the bumper skin (10) in a symmetrical manner to form a bumper skin assembly; and
-a pair of bodywork-side supports (30), which are respectively mounted at positions corresponding to the skin-side supports (20) on the bodywork in a symmetrical manner,
wherein, the skin-side support (20) and the bodywork-side support (30) each have a sliding assembly structure that cooperates with each other by a snap-fit engagement along the longitudinal direction (X) of the vehicle such that the bumper skin assembly is engaged and assembled to the bodywork end merely along the single longitudinal direction (X) of the vehicle.

## Description

The invention relates to the field of automobiles, and more particularly, to an end structure assembly of motor vehicle and assembly method thereof.

With the development of automobiles, styling is ever-changing, and requirements for external decorative parts are becoming ever higher. If there is a decorative trim, or special structure, etc., in a bumper assembly, that will cause the bumper unable to deform in the Y direction or easy to suffer aspect defaults or product defaults after deformation, then conventional Y-direction mounting structures for a bumper assembly cannot be used. In addition, with the increase of car ownership, assembly requirements of factories are becoming higher. The assembly process needs to be optimized while ensuring gaps and flushness.

An objective of the invention is to provide an end structure assembly of motor vehicle and assembly method thereof, so as to solve the problem with a bumper assembly of the prior art that: the bumper assembly cannot be deformed in the Y direction due to the increase of external aspect structures, thereby resulting in difficulty of assemblage.

In order to solve the above-described technical problem, the invention adopts the following technical solutions:
According to a first aspect of the invention, an end structure assembly of motor vehicle is provided, comprising: a bumper skin and a vehicle bodywork, wherein the bumper skin is generally in a flat cambered structure and embraces a vehicle bodywork end, the biggest size of the bumper skin being a bottom of the cambered structure extending approximately in the transverse direction (Y) of the vehicle, two symmetrical lateral ends of the cambered structure extending approximately in the longitudinal direction (X) of the vehicle, wherein the bumper skin is mounted on the bodywork in a manner of embracing the bodywork end; characterized in that the end structure assembly further includes:
- a pair of skin-side supports, which are respectively mounted at the two lateral ends of the bumper skin in a symmetrical manner to form a bumper skin assembly; and
- a pair of bodywork-side supports, which are respectively mounted at positions corresponding to the skin-side supports on the bodywork in a symmetrical manner,
wherein, the skin-side support and the bodywork-side support each have a sliding assembly structure that cooperates with each other by a snap-fit engagement along the longitudinal direction (X) of the vehicle such that the bumper skin assembly is engaged and assembled to the bodywork end merely along the single longitudinal direction (X) of the vehicle.

Preferably, the sliding assembly structure comprises a sliding position limiting slot structure and a sliding position limiting block structure, wherein the sliding position limiting slot structure is arranged on the skin-side support and protrudes toward a first direction (-Y) in the transverse direction of the vehicle;
the sliding position limiting block structure is arranged on the bodywork-side support and protrudes toward a second direction (+Y) in the transverse direction of the vehicle; the first direction (-Y) and the second directions (+Y) being opposite to each other,
wherein, the sliding position limiting block structure and the sliding position limiting slot structure are engaged with each other by a snap-fit along the longitudinal direction of the vehicle so as to achieve a sliding assembly of the bumper skin assembly and the bodywork end.

Preferably, the sliding position limiting block structure comprises: a pair of first cantilever beam and second cantilever beam extending parallel to each other along the second direction (+Y), and a third cantilever beam that connects the first cantilever beam and the second cantilever beam between them;
wherein the sliding position limiting slot structure comprises a first flange and a second flange, between which is formed a position limiting groove extending in the longitudinal direction (X) of the vehicle.

Preferably, the size of the third cantilever beam in the vertical direction (Z) of the vehicle is larger than the size of the position limiting groove in the vertical direction (Z) of the vehicle.

Preferably, the first flange and the second flange each have a boss protruding towards each other; a narrow part being formed between the bosses,
wherein during a sliding assembly of the bumper skin assembly and the bodywork end along the longitudinal direction (X) of the vehicle, the first cantilever beam cooperates with the narrow part by a snap-fit engagement.

Preferably, the bosses are in a semi-circular form.

Preferably, the bumper skin is provided with a number of orifice structures at its flange; and the skin-side support is provided with a number of bumps at its top, the skin-side support and the bumper skin being connected with each other by means of the cooperation between the bumps and the orifice structures.

Preferably, the skin-side support is provided with a plurality of reinforcement structures.

Preferably, a supporting rib in the vertical direction (Z) of the vehicle is further provided above the sliding position limiting slot structure on the skin-side support.

Preferably, the bumper skin and the skin-side support are further fixed by welding or riveting.

According to a second aspect of the invention, a method for assembling an end structure assembly for a motor vehicle as described above is provided, wherein the method includes the following sequential steps:
- mounting the pair of skin-side supports to the two lateral ends of the bumper skin in a symmetrical manner to form a bumper skin assembly;
- mounting the pair of bodywork-side supports at positions corresponding to the skin-side supports on the bodywork in a symmetrical manner;
- assembling the bumper skin assembly to the bodywork end by a snap-fit engagement along the single longitudinal direction (X) of the vehicle.

According to the end structure assembly for motor vehicle and its assembly method provided by the invention, since the bumper skin and the bodywork are respectively provided with corresponding side supports capable of sliding and engaging with each other along the vehicle longitudinal direction (X), the bumper assembly can easily be slid and assembled to the vehicle bodywork merely along the X direction without the need to be stretched and deformed in the Y direction to open wider, thus avoiding a difficult or impossible assembly situation where the bumper assembly cannot be deformed or very small amount of deformation is allowed in the Y direction due to its shape, strength, etc..

In addition, the separately manufactured side supports allow the sliding assembly structure to have more dynamic structure and more complex and diverse shapes, so that it can flexibly adapt to various assembly needs.

Besides, by adding Z-direction supporting structure and reasonable positioning arrangement, gaps and flushness are ensured, and the assembly process is optimized.

In conclusion, the invention provides an end structure assembly for motor vehicle and its assembly method that can be assembled along a single direction, ensures gaps and flushness, and optimizes the assembly process.
FIG. 1 is an overall assembled view of an end structure assembly for motor vehicle provided by a preferred embodiment according to the invention;
FIG. 2 is a separate structural schematic view of a bumper skin;
FIG. 3 is a separate structural schematic view of a skin-side support;
FIG. 4 is a separate structural schematic view of a bodywork-side support;
FIG. 5 is a structural schematic view when a bumper skin and a skin-side support are assembled together;
FIG. 6 is a sectional view along the sectional line A-A in FIG. 5;
FIG. 7 is an enlarged structural schematic view of a sliding position limiting slot structure on a skin-side support;
FIG. 8 is an enlarged structural schematic view of a sliding position limiting block structure on a bodywork-side support;
FIG. 9 is a state schematic view when a sliding position limiting slot and a sliding position limiting block structures are assembled together;
FIG. 10 is an overall assembled view of an end structure assembly for motor vehicle from another perspective.

The invention is further described below with reference to specific embodiments. It should be understood that, the following embodiments are merely used to describe the invention, but are not intended to limit the scope of the invention.

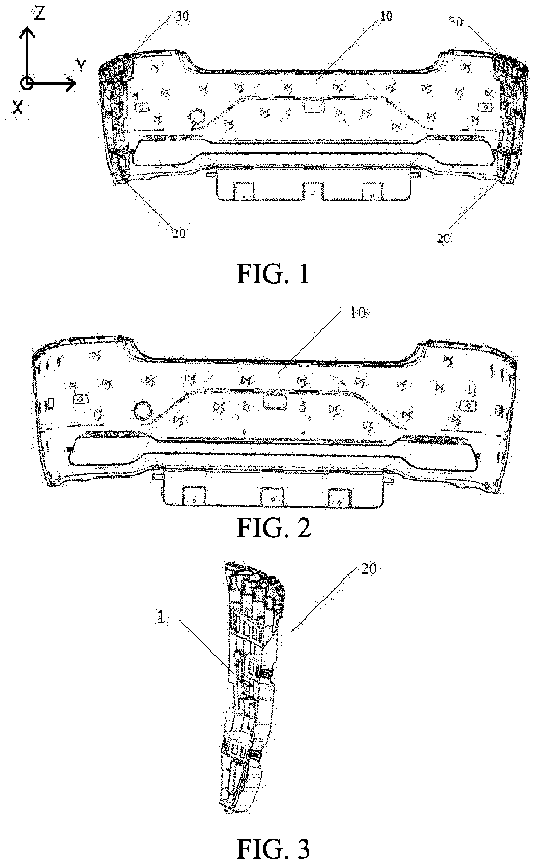

An end structure assembly for motor vehicle provided by a preferred embodiment according to the invention is shown in FIG. 1. The end structure assembly comprises: a bodywork (not shown), a bumper skin 10, a pair of skin-side supports 20, and a pair of bodywork-side supports 30.

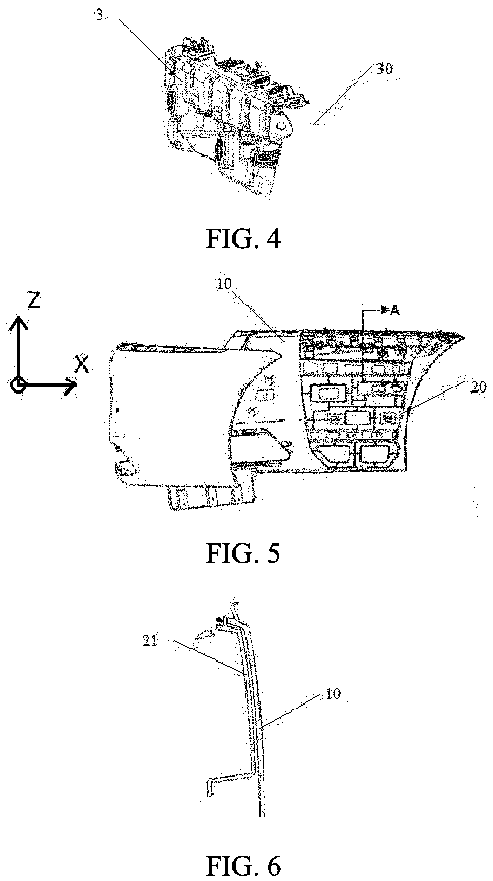

In the embodiment, the bumper skin 10, as shown in FIG. 2, is generally in a flat cambered structure and embraces a vehicle bodywork end. The cambered structure has a long and flat bottom and two symmetrical lateral ends at each side of the bottom. The biggest size of the bumper skin 10 is the bottom of the cambered structure which extends approximately in the transverse direction (Y) of the vehicle. The two symmetrical lateral ends of the cambered structure extends approximately in the longitudinal direction (X) of the vehicle. The bumper skin 10 is mounted on the bodywork in a manner of embracing the bodywork end. The skin-side supports 20, as shown in FIG. 3, has a skin-side support body 1 extending in the vertical direction Z. The skin-side supports 20 are respectively mounted at the two lateral ends of the bumper skin 10 in a symmetrical manner to provide a medium for the bumper skin 10 to be assembled to the bodywork and to provide supports on both sides of the bumper skin 10. The bodywork-side supports 30, as shown in FIG. 4, has a bodywork-side support body 3 extending in the vertical direction Z. The bodywork-side supports 30 are respectively mounted at positions corresponding to the skin-side supports 20 on the bodywork in a symmetrical manner, and engaged with the skin-side support 20 in a sliding manner, so as to assemble the bumper skin assembly to the bodywork.

According to the bumper assembly provided by the preferred embodiment, in reference to FIG. 5, FIG. 6, and FIG. 10, a flange of the bumper skin 10 is provided with a number of orifice structures, and a top of the skin-side supports 20 is provided with a number of bumps 21. When a skin-side support 20 is assembled to the bumper skin 10, first, the bumps 21 on the skin-side support 20 are inserted into the corresponding orifice structures on the bumper skin 10, and then, the skin-side support 20 is rotated to the assembled position. Thus, a preliminary assemblage of the skin-side support 20 and the bumper skin 10 can be completed to form a bumper skin assembly.

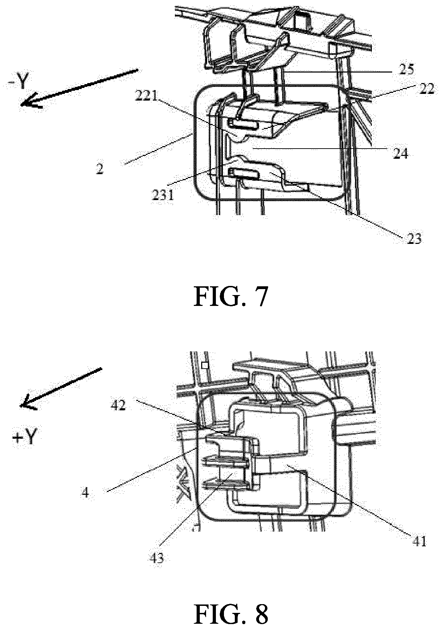

According to this preferred embodiment, the skin-side supports 20 and the bodywork-side supports 30 are connected via a sliding assembly structure. Specifically, as shown in FIG. 7, the skin-side support body 1 is provided with a sliding position limiting slot structure 2 protruding along the -Y direction. The sliding position limiting slot structure 2 comprises a first flange 22 and a second flange 23, between which a position limiting groove 24 extending in the X direction is formed. As shown in FIG. 8, the bodywork-side support body 3 is provided with a sliding position limiting block structure 4 protruding along the +Y direction. The sliding position limiting block structure 4 comprises: a pair of first cantilever beam 41 and second cantilever beam 42 extending parallel to each other along the +Y direction, and a third cantilever beam 43 that connects the first cantilever beam 41 and the second cantilever beam 42 between them. The first cantilever beam 41, the second cantilever beam 42, and the third cantilever beam 43 form a ring-shaped structure.

Thus, when the bodywork-side support 30 is slide in the X direction, the sliding position limiting block structure 4 on the bodywork-side support 30 is engaged and assembled with the sliding position limiting slot structure 2 on the skin-side support 20 by a snap-fit engagement, thereby achieving a sliding assemblage of the skin-side support 20 and the bodywork-side support 30.

According to this preferred embodiment, the width (Z direction size) of the third cantilever beam 43 is larger than the width (Z direction size) of the position limiting groove 24 extending in the X direction and formed between the first flange 22 and the second flange 23, as shown in FIG. 8, thus the sliding position limiting block structure 4 is prevented from coming out of the sliding position limiting slot structure 2 in the Y direction.

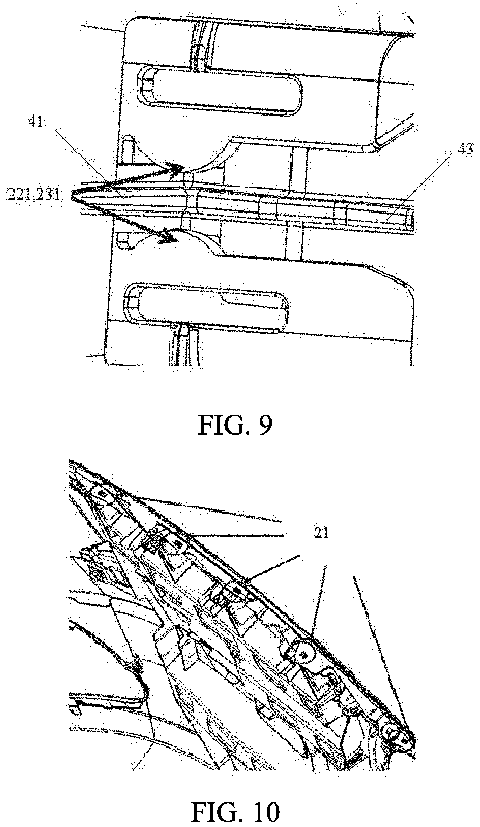

According to this preferred embodiment, the first flange 22 and the second flange 23 each have a semi-circular boss 221, 231 extending towards each other. Between these two semi-circular bosses 221, 231 is formed a narrow part, as shown in FIG. 9, during the sliding assemblage of the skin-side support 20 and the bodywork-side support 30, the first cantilever beam 41 cooperates with the narrow part by a snap-fit engagement, thereby preventing the sliding position limiting block structure 4 from coming out of the sliding position slot structure 2 in the X direction.

According to this preferred embodiment, the skin-side supports 20 are provided with a plurality of reinforcement structures.

According to this preferred embodiment, a Z-direction supporting rib 25 is further provided above the sliding position limiting slot structure 2 on the skin-side supports 20 as shown in FIG. 7. In this way, Z-direction support is provided, the gap and flushness is guaranteed, and the assembly process is optimized.

According to this preferred embodiment, the bumper skin 10 and the skin-side support 20 are further fixed by welding or riveting.

According to a second aspect of the invention, a method for assembling the end structure assembly for motor vehicle as described above is provided, wherein the method includes the following sequential steps:
- mounting the pair of skin-side supports to the two lateral ends of the bumper skin in a symmetrical manner to form a bumper skin assembly;
- mounting the pair of bodywork-side supports at positions corresponding to the skin-side supports on the bodywork in a symmetrical manner;
- assembling the bumper skin assembly to the bodywork end by a snap-fit engagement along the single longitudinal direction X of the vehicle.

The foregoing descriptions are merely preferred embodiments of the invention, but are not intended to limit the scope of the invention. Various changes may be further made to the foregoing embodiments of the invention. Any simple, equivalent change and modification made according to the claims of this invention application and the content of the specification of this invention application shall fall within the protection scope of the claims of the invention. The content that is not described in detail in the invention is content of a conventional technology.

## Claims

1. An end structure assembly for a motor vehicle, comprising: a bumper skin (10) and a vehicle bodywork, wherein the bumper skin (10) is generally in a flat cambered structure and embraces a vehicle bodywork end, the biggest size of the bumper skin (10) being a bottom of the cambered structure extending approximately in the transverse direction (Y) of the vehicle, two symmetrical lateral ends of the cambered structure extending approximately in the longitudinal direction (X) of the vehicle, wherein the bumper skin (10) is mounted on the bodywork in a manner of embracing the bodywork end; **characterized in that** the end structure assembly further includes:
- a pair of skin-side supports (20), which are respectively mounted at the two lateral ends of the bumper skin (10) in a symmetrical manner to form a bumper skin assembly; and
- a pair of bodywork-side supports (30), which are respectively mounted at positions corresponding to the skin-side supports (20) on the bodywork in a symmetrical manner,
wherein, the skin-side support (20) and the bodywork-side support (30) each have a sliding assembly structure that cooperates with each other by a snap-fit engagement along the longitudinal direction (X) of the vehicle such that the bumper skin assembly is engaged and assembled to the bodywork end merely along the single longitudinal direction (X) of the vehicle.

2. The end structure assembly according to claim 1, wherein the sliding assembly structure comprises a sliding position limiting slot structure (2) and a sliding position limiting block structure (4), wherein the sliding position limiting slot structure (2) is arranged on the skin-side support (20) and protrudes toward a first direction (-Y) in the transverse direction of the vehicle;
the sliding position limiting block structure (4) is arranged on the bodywork-side support (30) and protrudes toward a second direction (+Y) in the transverse direction of the vehicle; the first direction (-Y) and the second directions (+Y) being opposite to each other,
wherein, the sliding position limiting block structure (4) and the sliding position limiting slot structure (2) are engaged with each other by a snap-fit along the longitudinal direction (X) of the vehicle so as to achieve a sliding assembly of the bumper skin assembly and the bodywork end.

3. The end structure assembly according to claim 2, wherein the sliding position limiting block structure (4) comprises: a pair of first cantilever beam (41) and second cantilever beam (42) extending parallel to each other along the second direction (+Y), and a third cantilever beam (43) that connects the first cantilever beam (41) and the second cantilever beam (42) between them;
wherein the sliding position limiting slot structure (2) comprises a first flange (22) and a second flange (23), between which is formed a position limiting groove (24) extending in the longitudinal direction (X) of the vehicle.

4. The end structure assembly according to claim 3, wherein the size of the third cantilever beam (43) in the vertical direction (Z) of the vehicle is larger than the size of the position limiting groove (24) in the vertical direction (Z) of the vehicle.

5. The end structure assembly according to claim 3, wherein the first flange (22) and the second flange (23) each have a boss (221, 231), preferably in a semi-circular form, protruding towards each other; a narrow part being formed between the bosses (221, 231),
wherein during a sliding assembly of the bumper skin assembly and the bodywork end along the longitudinal direction (X) of the vehicle, the first cantilever beam (41) cooperates with the narrow part by a snap-fit engagement.

6. The end structure assembly according to claim 1, wherein the bumper skin (10) is provided with a number of orifice structures at its flange; and the skin-side support (20) is provided with a number of bumps (21) at its top, the skin-side support (20) and the bumper skin (10) being connected with each other by means of the cooperation between the bumps (21) and the orifice structures.

7. The end structure assembly according to claim 1, wherein the skin-side support (20) is provided with a plurality of reinforcement structures.

8. The end structure assembly according to claim 1, wherein a supporting rib (25) in the vertical direction (Z) of the vehicle is further provided above the sliding position limiting slot structure (2) on the skin-side support (20).

9. The end structure assembly according to claim 6, wherein the bumper skin (10) and the skin-side support (20) are further fixed by welding or riveting.

10. A method for assembling an end structure assembly for a motor vehicle according to any one of the previous claims, wherein the method includes the following sequential steps:
- mounting the pair of skin-side supports (20) to the two lateral ends of the bumper skin (10) in a symmetrical manner to form a bumper skin assembly;
- mounting the pair of bodywork-side supports (30) at positions corresponding to the skin-side supports (20) on the bodywork in a symmetrical manner;
- assembling the bumper skin assembly to the bodywork end by a snap-fit engagement along the single longitudinal direction (X) of the vehicle.
